# EUROPÄISCHE PATENTSCHRIFT

(11) **EP 3 768 542 B1**
(45) Veröffentlichungstag und Bekanntmachung des Hinweises auf die Patenterteilung: **03.05.2023**
(21) Anmeldenummer: 19712506.5
(22) Anmeldetag: 28.02.2019
(51) Int. Cl.: B60K 15/05

(54) **STELLANTRIEB FÜR EIN KRAFTFAHRZEUG-KLAPPENELEMENT**
ACTUATOR FOR A MOTOR-VEHICLE FLAP ELEMENT
ACTIONNEUR POUR UN ÉLÉMENT DE CLAPET DE VÉHICULE AUTOMOBILE

(30) Priorität: 23.03.2018 DE 102018106923
(43) Veröffentlichungstag der Anmeldung: 27.01.2021
(73) Patentinhaber: Kiekert AG, 42579 Heiligenhaus (DE)
(72) Erfinder: GOLDMANN, Sebastian, 44869 Bochum (DE); PIEPER, Ralf, 42579 Heiligenhaus (DE); TÖPFER, Claus, 71063 Sindelfingen (DE)
(86) Internationale Anmeldenummer: PCT/DE2019/100184
(87) Internationale Veröffentlichungsnummer: WO 2019/179556

(56) Entgegenhaltungen:
- EP-A1- 3 187 357
- DE-A1-102011 116 067
- DE-A1-102015 005 303
- DE-A1-102015 005 646
- DE-A1-102015 206 319
- JP-A- 2016 117 313
- JP-A- 2016 223 150

## Beschreibung

Die Erfindung betrifft einen Stellantrieb für ein Kraftfahrzeug-Klappenelement, insbesondere für eine Tankklappe eines Kraftfahrzeuges, mit einem Motor, und mit einem das Kraftfahrzeug-Klappenelement beaufschlagenden Stellelement, wobei das Kraftfahrzeug-Klappenelement und mit ihm das Stellelementzwischen einer Öffnungs- und Schließposition verstellbar ausgebildet ist, und wobei zusätzlich ein vom Motor beaufschlagter Drehriegel vorgesehen ist, welcher zum Verriegeln/Entriegeln des Stellelementes dient.

Stellantriebe für Kraftfahrzeug-Klappenelemente und insbesondere Tankklappen sind unter anderem Gegenstand der WO 01/07738 A1. Dabei wird meistens so vorgegangen, dass die Tankklappe nach Beendigung eines Tankvorganges von Hand geschlossen wird. Das die Tankklappe beaufschlagende Stellelement wird hierbei ebenso wie die Tankklappe bzw. das Kraftfahrzeug-Klappenelement von einer zunächst eingenommenen Öffnungsposition in eine Schließposition überführt.

Beim gattungsbildenden Stand der Technik nach der DE 10 2011 116 067 A1 ist in diesem Zusammenhang eine zusätzliche Verriegelung für die Tankklappe vorgesehen. Die Verriegelung weist einen durch Öffnen und Schließen der Tankklappe zwischen einer Öffnungs- und einer Schließposition verstellbaren Riegelbolzen auf. Zusätzlich ist zum Verriegeln der Tankklappe eine mit einem Antrieb versehene Sperrklinke vorgesehen. Die Sperrklinke blockiert bei verriegelter Tankklappe den Riegelbolzen. Der Antrieb für die Sperrklinke sorgt für die Steuerung der Sperrklinke über zwischengeschaltete Elemente. Dadurch können Funktionsstörungen auftreten.

Betätigungsvorrichtungen für eine Tankklappe sind darüber hinaus durch die beiden Vorveröffentlichungen DE 10 2012 004 071 A1 und DE 10 2012 004 078 A1 bekannt. Die dortigen Betätigungsvorrichtungen für die Tankklappe sind mit einem Verriegelungselement ausgerüstet. Das Verriegelungselement greift in eine Verriegelungsausnehmung ein. Um die Verriegelung zu lösen, ist ein Elektromotor vorgesehen, welcher über ein Zahnrad auf das Verriegelungselement bzw. einen dortigen Verriegelungsriegel arbeitet.

Der Stand der Technik hat sich grundsätzlich bewährt. Allerdings ist die Betätigung des Drehriegels bzw. der Sperrklinke nach dem gattungsbildenden Stand der Technik verbesserungsbedürftig. Das lässt sich im Kern darauf zurückführen, dass der Antrieb über eine mehr oder minder große Zahl an zwischengeschalteten mechanischen Elementen auf den Drehriegel arbeitet. Dadurch können Funktionsstörungen auftreten, zumal das mit Hilfe des Drehriegels blockierte Stellelement hinsichtlich seiner jeweils eingenommenen Position Toleranzen unterworfen ist. Als weitere Folge hiervon lassen sich die bisherigen Stellantriebe kaum oder nur schwer beispielsweise im Notfall betätigen und insbesondere Notentriegeln, falls der Motor ausgefallen ist. Hier will die Erfindung insgesamt Abhilfe schaffen.

Der Erfindung liegt das technische Problem zugrunde, einen derartigen Stellantrieb so weiter zu entwickeln, dass die Ver- und Entriegelung einfach und funktionssicher arbeitet. Außerdem soll zusätzlich eine manuelle Notentriegelung ermöglicht werden.

Zur Lösung dieser technischen Problemstellung ist ein gattungsgemäßer Stellantrieb für ein Kraftfahrzeug-Klappenelement und insbesondere für eine Tankklappe eines Kraftfahrzeuges, bei dem der Motor den Drehriegel direkt antreibt, im Rahmen der Erfindung dadurch gekennzeichnet, dass eine Notentriegelungseinheit für den Drehriegel vorgesehen ist, wobei die Notentriegelungseinheit mit einer von außen zugänglichen Handhabe und einem am Drehriegel angreifenden Hebel ausgerüstet ist, wobei ein drehbar in einer Basis eines Gehäuses des Stellantriebs gelagerter Stellzapfen an dem Hebel angeschlossen ist, sodass mit Hilfe der Handhabe der Stellzapfen und folglich der daran angeschlossene Hebel rotiert werden kann.

Im Unterschied zum Stand der Technik wird der Drehriegel bzw. die "Sperrklinke" nach der gattungsbildenden DE 10 2011 116 067 A1 erfindungsgemäß durch den Motor direkt angetrieben, das heißt ohne zwischengeschaltete mechanische Übertragungselemente. Im Detail verfügt bei der Erfindung eine Abtriebswelle des Motors zu diesem Zweck über ein ausgangsseitiges Zahnrad, welches mit einer Verzahnung am Drehriegel kämmt und unmittelbar in Eingriff ist. Dadurch wird jede Drehbewegung der Abtriebswelle des Motors auf den Drehriegel unmittelbar übertragen und der Drehriegel auf diese Weise beaufschlagt.

Dabei ist im Regelfall die Auslegung so getroffen, dass der Drehriegel in eine Ausnehmung des Stellelementes zum Verriegeln des Stellelementes eingreift. Um das Stellelement zu entriegeln, wird der Drehriegel aus der Ausnehmung herausgefahren. Beide prinzipiellen Stellbewegungen können mit Hilfe des Motors absolviert werden.

Es ist aber auch möglich, dass der Motor lediglich für das Entriegeln des Stellelementes sorgt. In diesem Fall wird die Verriegelung des Stellelementes federunterstützt vorgenommen. Zu diesem Zweck kann der Drehriegel nach vorteilhafter Ausgestaltung mit einer Feder in Richtung der Stellung "Verriegeln" des Stellelementes vorgespannt sein.

Eine besonders kompakte und funktionsgerechte Auslegung wird für den Fall beobachtet, dass der Motor mit seiner Abtriebswelle einen Stellarm des Drehriegels beaufschlagt. In diesem Fall ist der fragliche Stellarm mit der Verzahnung ausgerüstet, in welche unmittelbar das ausgangsseitig des Motors vorgesehene Zahnrad an der Abtriebswelle des Motors zur Beaufschlagung des Drehriegels eingreift.

Nach weiterer vorteilhafter Ausgestaltung ist der Drehriegel nicht nur mit dem Stellarm zum Eingriff des Motors ausgerüstet, sondern zusätzlich mit einem Verriegelungsarm. Der Verriegelungsarm wechselwirkt mit dem Stellelement bzw. der Ausnehmung im Stellelement. Dazu kann der Verriegelungsarm in die Ausnehmung des Stellelementes zum Verriegeln des Stellelementes eingreifen und taucht zum Entriegeln des Stellelementes aus der fraglichen Ausnehmung hervor.

Im Allgemeinen sind der Stellarm und der Verriegelungsarm größtenteils parallel zueinander verlaufend an einem Ausleger des Drehriegels vorgesehen bzw. an diesen Ausleger angeschlossen. Dadurch wird ein besonders kompakter Aufbau realisiert, weil der Stellarm und der Verriegelungsarm in gleicher Richtung bewegt werden und orientiert sind. Hinzu kommt, dass der Stellarm und der Verriegelungsarm größtenteils vertikal an den fraglichen Ausleger des Drehriegels angeschlossen sind bzw. von diesem abstehen.

Erfindungsgemäß umfasst die Erfindung eine Notverriegelungseinheit für den Drehriegel. Die Notverriegelungseinheit ist erfindungsgemäß mit einer von außen zugänglichen Handhabe und einem am Drehriegel angreifenden Hebel ausgerüstet. Die Handhabe für die Notentriegelungseinheit ist also außerhalb eines Gehäuses für den Stellantrieb vorgesehen, so dass das Stellelement und mit ihm das Kraftfahrzeug-Klappenelement auch dann beispielsweise entriegelt werden können, wenn der Motor ausgefallen ist. Dazu greift der mit Hilfe der Handhabe verschwenkbare Hebel im Allgemeinen an einer Kontur des Drehriegels an, um den Drehriegel zumindest in die Position "entriegelt" des Stellelementes zu überführen. Selbstverständlich ist die Notentriegelungseinheit prinzipiell auch dazu in der Lage, das Kraftfahrzeug-Klappenelement bzw. die Tankklappe im Bedarfsfall zu verriegeln, falls eine solche Funktionalität gewünscht wird.

Im Regelfall arbeitet die Notentriegelungseinheit jedoch überwiegend und ausschließlich derart, dass der Drehriegel bei ausgefallenem Motor zumindest in seine Position "entriegelt" überführt werden kann. Dadurch wird ein Bediener auch bei ausgefallenem Motor in die Lage versetzt, dass Kraftfahrzeug-Klappenelement bzw. die Tankklappe öffnen zu können.

Zur Beaufschlagung des Motors und damit des Drehriegels ist im Allgemeinen ein Schalter im Innern des Kraftfahrzeuges oder auch eine Fernbedieneinheit vorgesehen. Beispielsweise kann der Motor auch mit Hilfe eines Tasters an einem Funkschlüssel betätigt werden, so dass auf diese Weise das Kraftfahrzeug-Klappenelement entriegelt wird. Dabei korrespondiert die entriegelte Position des Kraftfahrzeug-Klappenelementes bzw. der Tankklappe im Allgemeinen dazu, dass diese zumindest einen Spalt breit gegenüber einer Fahrzeugkarosserie geöffnet ist, so dass der Bediener durch den Spalt hindurch das Kraftfahrzeug-Klappenelement ergreifen und komplett aufschwenken kann.

Grundsätzlich ist es natürlich auch möglich, dass das Kraftfahrzeug-Klappenelement nach der Entriegelung mit Hilfe des Motors federunterstützt komplett aufspringt und geöffnet wird. Um dies zu erreichen, kann das Stellelement vorteilhaft mit Hilfe einer Druckfeder in Richtung der Öffnungsposition des Kraftfahrzeug-Klappenelementes vorgespannt sein. Hierzu korrespondiert meistens eine als "Ejektor" bezeichnete Variante. Zum Schließen des Kraftfahrzeug-Klappenelementes bzw. der Tankklappe wird diese mechanisch durch Druck beaufschlagt. Dadurch kann der mit Hilfe der Feder in Richtung "Verriegeln" des Stellelementes vorgespannte Drehriegel erneut mit dem Stellelement wechselwirken und dieses verriegeln.

Abgesehen davon ist auch ein sogenannter "Push-Push"-Betrieb möglich. In diesem Fall ist das Stellelement mit einer Kulisse zur Steuerung seiner Öffnungs- und Schließbewegung ausgerüstet. Zur Einnahme der Öffnungs- und Schließposition des Kraftfahrzeug-Klappenelementes greift im Allgemeinen eine Feder in die fragliche Kulisse ein. Als Folge hiervon lässt sich das Kraftfahrzeug-Klappenelement bzw. die Tankklappe durch eine erste Druckbeaufschlagung von außen ("Push") verschließen. Zum Öffnen ist dann eine erneute Druckbeaufschlagung des Kraftfahrzeug-Klappenelementes bzw. der Tankklappe ("Push") erforderlich. Diese grundsätzliche Funktionsweise in Verbindung mit einer Kulisse am zugehörigen Stellelement und auch eine geeignete Form der Kulisse werden beispielhaft im gattungsbildenden Stand der Technik nach der DE 10 2011 116 067 A1 beschrieben. Tatsächlich kommt es an dieser Stelle zu einer Zwangsführung der in die Kulisse eingreifenden Feder.

Die Kulisse ist im Regelfall in das Stellelement integriert. Dadurch kann der Drehriegel zum Verriegeln des Stellelementes in die Kulisse eingreifen und zum Entriegeln die Kulisse freigeben. Eine zusätzliche Ausnehmung am Stellelement ist in einem solchen Fall entbehrlich.

Im Ergebnis wird ein Stellantrieb für ein Kraftfahrzeug-Klappenelement zur Verfügung gestellt, welcher zunächst einmal funktionssicher arbeitet. Das lässt sich auf den Direktantrieb des Drehriegels mit Hilfe des Motors zurückführen. Als Folge hiervon kann vorteilhaft auch eine Notentriegelungseinheit realisiert werden. Mit Hilfe der Notentriegelungseinheit und einer in diesem Zusammenhang vorgesehenen und von außen zugänglichen Handhabe lässt sich das Stellelement und mit ihm das Kraftfahrzeug-Klappenelement auch dann entriegeln, wenn der Motor ausgefallen ist. Das wäre bei einem indirekten Antrieb des Drehriegels über beispielsweise zwischen dem Motor und dem Dachriegel zwischengeschaltete mechanische Elemente kaum möglich. Denn diese mechanischen Übertragungselemente neigen in einem solchen Fall zum Verkanten und zur Blockade.

Als weiterer Vorteil ist zu nennen, dass sich der erfindungsgemäße Stellantrieb unschwer an verschiedene Bedürfnisse und Funktionsabfolgen anpassen lässt. So ist neben dem zuvor bereits beschriebenen Betrieb "Push-Push" wahlweise auch der Betrieb im Sinne eines "Ejektors" möglich. Dazu ist es lediglich erforderlich, die in die Kulisse eingreifende Feder zu entfernen. Als Folge hiervon lässt sich der erfindungsgemäße Stellantrieb modular auslegen und an verschiedene Einbausituationen und Anforderungen problemlos anpassen. Hierin sind die wesentlichen Vorteile zu sehen.

Im Folgenden wird die Erfindung anhand einer Ausführungsbeispiel darstellenden Zeichnung näher erläutert; es zeigen:
- Fig. 1: den erfindungsgemäßen Stellantrieb in einer Übersicht und in eingebautem Zustand,
- Fig. 2A, B: den Stellantrieb im Detail in einer "Ejektor"-Variante und
- Fig. 3A, B: ein abgewandeltes Ausführungsbeispiel des Stellantriebes nach der Fig. 2A, B in der Variante "Push-Push"

In den Figuren ist ein Stellantrieb für ein Kraftfahrzeug-Klappenelement dargestellt. Bei dem Kraftfahrzeug-Klappenelement handelt es sich nicht einschränkend um eine Tankklappe 1 eines Kraftfahrzeuges. Der Stellantrieb verfügt über ein Gehäuse 2, welches im Ausführungsbeispiel zweiteilig mit einem Deckel 2a und einer Basis 2b ausgerüstet ist. In das Gehäuse 2 greift ein an die Tankklappe 1 angeschlossener oder angeformter Stift oder Bolzen 3 ein.

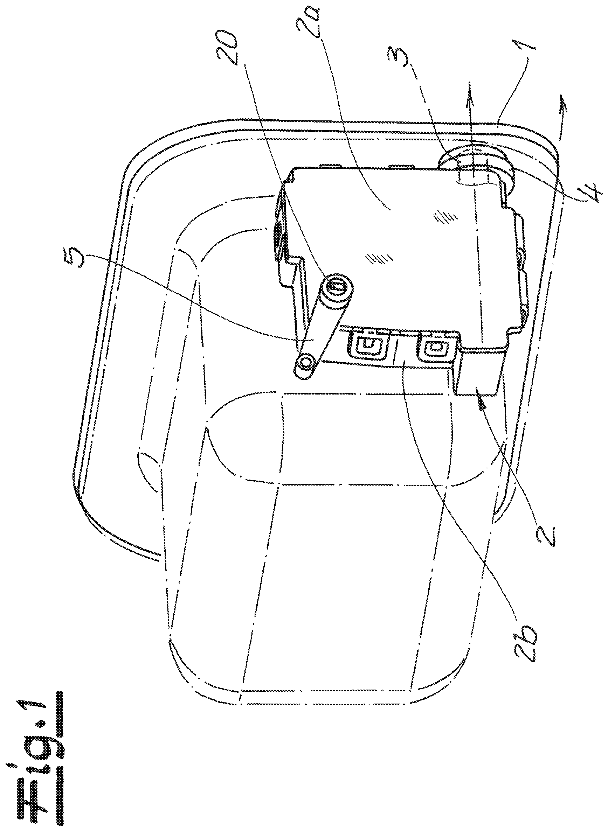

Zu diesem Zweck ist eine Dichtung 4 vorgesehen, mit deren Hilfe das Gehäuse 2 gegenüber dem Stift respektive Bolzen 3 abgedichtet ist. Etwaige Bewegungen der Tankklappe 1 werden folglich über den angeschlossenen Bolzen bzw. Stift 3 ins Innere des Gehäuses 2 übertragen bzw. vom Innern des Gehäuses 2 auf den fraglichen Stift oder Bolzen 3 und damit die Tankklappe 1. Schließlich erkennt man in der Fig. 1 noch eine Handhabe 5, die zu einer nachfolgend noch näher zu beschreibenden Notentriegelungseinheit 5, 20, 21 gehört. Die Handhabe 5 ist von außen zugänglich, das heißt von außerhalb des Gehäuses 2.

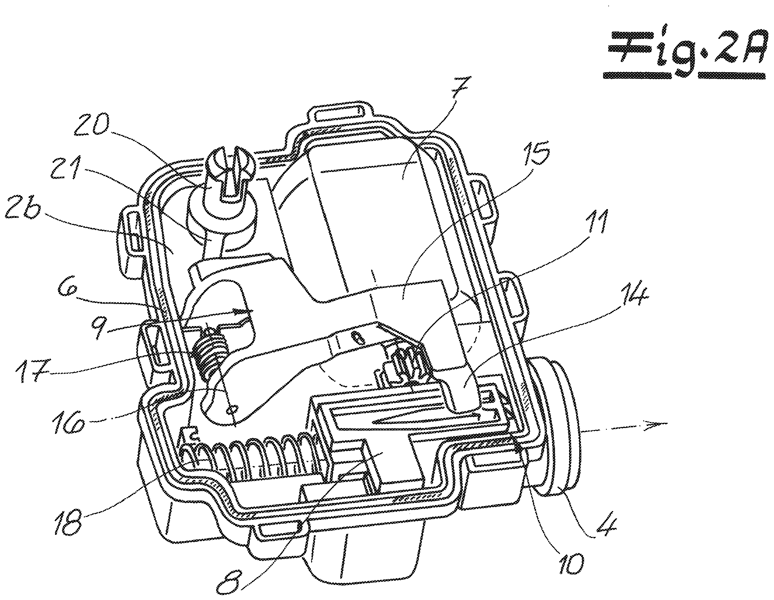

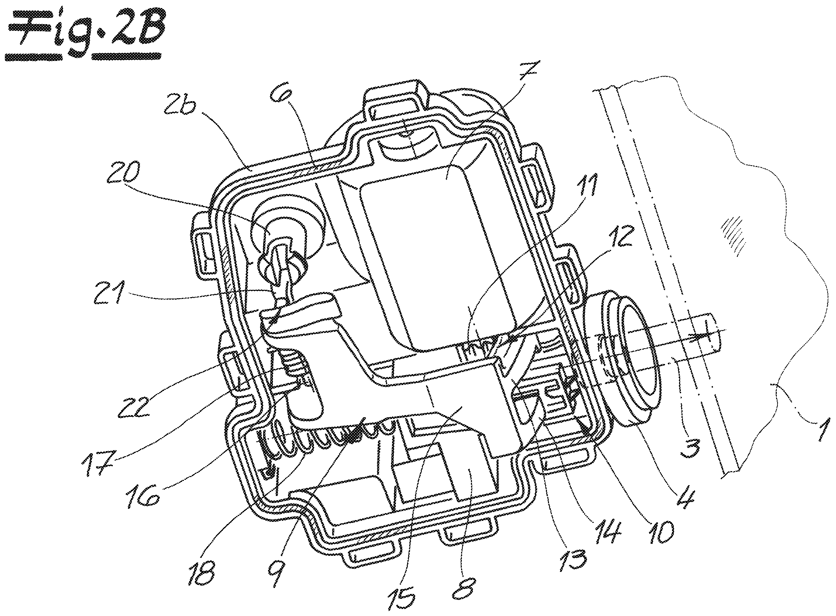

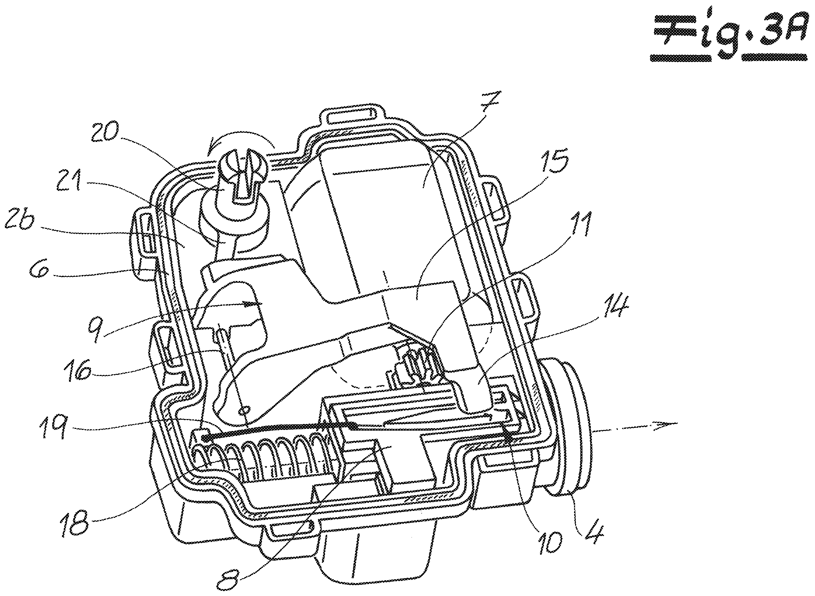

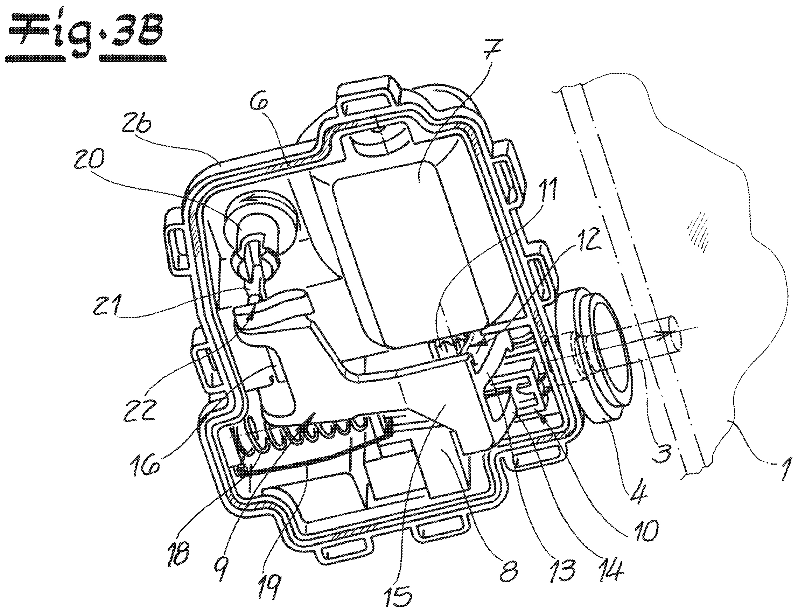

Der mit dem Gehäuse 2 ausgerüstete Stellantrieb wird nun mit Bezug zu den Fig. 2A, B und 3A, B im Detail beschrieben. In den Fig. 2A, B und 3A, B ist jeweils der Deckel 2a des Gehäuses 2 entfernt, so dass man jeweils die von der Basis 2b im Innern aufgenommenen Bestandteile des Stellantriebes erkennt. Zur dichten Verbindung der beiden Bestandteile 2a, 2b des Gehäuses 2 ist eine umlaufende Dichtung 6 randseitig der Basis 2b realisiert.

In seinen Grundzügen verfügt der Stellantrieb über einen Motor 7. Bei dem Motor 7 handelt es sich um einen Elektromotor. Außerdem ist ein das Kraftfahrzeug-Klappenelement bzw. die Tankklappe 1 im Beispielfall beaufschlagendes Stellelement 8 realisiert. In axialer Verlängerung des Stellelementes 8 erstreckt sich der an die Tankklappe 1 angeschlossene Bolzen bzw. Stift 3. Der Bolzen bzw. Stift 3 und das Stellelement 8 bewegen sich in gemeinsamer Längserstreckung und können prinzipiell miteinander verbunden sein. Im Regelfall liegen das Stellelement 8 und der Bolzen 3 jedoch Stoß an Stoß aneinander an.

Das Kraftfahrzeug-Klappenelement bzw. die Tankklappe 1 kann zwischen einer Öffnungs- und Schließposition verstellt werden. In der Fig. 1 ist die Schließposition der Tankklappe 1 dargestellt. Demgegenüber korrespondiert die schematisch und strichpunktiert gezeigte Position der Tankklappe 1 im Rahmen der Fig. 2B und 3B zur geöffneten Position der Tankklappe 1.

Zusätzlich ist ein vom Motor bzw. Elektromotor 7 beaufschlagter Drehriegel 9 vorgesehen, mit Hilfe des Drehriegels 9 kann das Stellelement 8 verriegelt/entriegelt werden. Dazu greift der Drehriegel 9 beispielsweise in bzw. hinter eine Ausnehmung 10 des Stellelementes 8 ein. Die Ausnehmung 10 ist in das Stellelement 8 integriert. Nach dem gezeigten Beispielfall ist die Ausnehmung 10 in eine Oberseite des quaderförmigen Stellelementes 8 eingelassen bzw. definiert die gesamte Oberseite. Im Ausführungsbeispiel und nach vorteilhafter Ausgestaltung übernimmt die Ausnehmung 10 eine zweifache Funktion.

Zunächst einmal fungiert die Ausnehmung 10 bzw. eine hintere Kante des Stellelementes 8 als gleichsam Widerlager für den Drehriegel 9, um das Stellelement 8 zu verriegeln / entriegeln. Denn in verriegelter Position des Stellelementes 8 sorgt der Drehriegel 9 durch seinen Eingriff in bzw. hinter die Ausnehmung 10 dafür, dass das Stellelement 8 blockiert ist. Demgegenüber korrespondiert die entriegelte Position des Stellelementes 8 dazu, dass das Stellelement 8 von dem Drehriegel 9 frei ist. Eine weitere Funktion der Ausnehmung 10 liegt dergestalt vor, dass es sich bei Ausnehmung 10 im Beispielfall um eine Kulisse 10 handelt. Mit Hilfe der Kulisse 10 kann eine Zwangsführung des Stellelementes 8 im Sinne der Variante "Push-Push" nach der Fig. 3A, B realisiert werden.

Erfindungsgemäß treibt der Motor 7 nun den Drehriegel 9 direkt an. Zu diesem Zweck ist der Motor 7 an seiner Abtriebswelle mit einem ausgangsseitigen Zahnrad 11 ausgerüstet. Das Zahnrad 11 greift in eine Verzahnung 12 am Drehriegel 9 ein. Im Ausführungsbeispiel findet sich die Verzahnung 12 an einem Stellarm 13. Neben dem Stellarm 13 weist der Drehriegel 9 darüber hinaus noch einen Verriegelungsarm 14 auf.

Man erkennt, dass der Stellarm 13 und der Verriegelungsarm 14 größtenteils parallel zueinander verlaufend an einem Ausleger 15 des Drehriegels 9 angeordnet bzw. an den betreffenden Ausleger 15 angeschlossen sind. Außerdem sind sowohl der Stellarm 13 als auch der Verriegelungsarm 14 leicht gekrümmt ausgebildet, was insbesondere dem Eingriff zwischen dem ausgangsseitig des Motors 7 vorgesehenen Zahnrad 11 in die Verzahnung 12 geschuldet ist. Ferner stehen der Stellarm 13 und der Verriegelungsarm 14 überwiegend vertikal auf dem Ausleger 15 auf.

Der Drehriegel 9 ist um eine Achse 16 schwenkbar im Gehäuse 2 bzw. dessen Basis 2b gelagert. Der Ausleger 15 des Drehriegels 9 erstreckt sich größtenteils parallel zu einer Grundebene des Gehäuses 2 bzw. dessen Basis 2b. Folgerichtig korrespondiert eine Schwenkbewegung des Drehriegels 9 dazu, dass sowohl der Stellarm 13 als auch der Verriegelungsarm 14 aufgrund ihrer überwiegend parallelen Ausrichtung zueinander eine demgegenüber vertikale Stellbewegung vollführen. Dadurch kann der Verriegelungsarm 14 in die größtenteils parallel zur Basis 2b orientierte Ausnehmung bzw. Kulisse 10 von oben eintauchen und hieraus auch wieder auftauchen bzw. gegen die hintere Kante des Stellelementes 8 fahren oder sich hiervon lösen.

Bei der Variante nach der Fig. 2A, B ist der Drehriegel 9 mit einer Feder 17 ausgerüstet. Man erkennt, dass die Feder 17 die Achse bzw. Drehachse 16 respektive einen diese Drehachse 16 definierenden Bolzen wendel- oder spiralförmig umgibt. Die fragliche Feder 17 am Drehriegel 9 sorgt dafür, dass der Drehriegel 9 mit Hilfe der Feder 17 in Richtung "Verriegeln" des Stellelementes 8 vorgespannt ist. Im Ausführungsbeispiel sorgt die Feder 17 folglich dafür, dass der Drehriegel 9 bzw. dessen Verriegelungsarm 14 "nach unten" in Richtung auf die Ausnehmung bzw. Kulisse 10 oder die hintere Kante vorgespannt wird.

Das heißt, im Regelfall ist das Stellelement 8 bei der Variante nach der Fig. 2A, B "verriegelt". Um nun das Stellelement 8 zu entriegeln und folglich das Stellelement 8 und mit ihm den Bolzen 3 sowie die Tankklappe 1 freizugeben, ist es erforderlich, dass der Motor bzw. Elektromotor 7 den Drehriegel 9 in seine Position "entriegeln" überführt. Dazu arbeitet der Motor bzw. Elektromotor 7 über sein ausgangsseitiges Zahnrad 11 und die Verzahnung 12 auf den Stellarm 13 in der Weise, dass der Verriegelungsarm 14 aus seinem bisher eingenommenen Eingriff an der Kulisse 10 frei kommt und auftaucht. Als Folge hiervon ist die Ausnehmung bzw. Kulisse 10 bzw. die hintere Kante des Stellelementes 8 von dem Verriegelungsarm 14 frei. Das Stellelement 8 ist entriegelt. Gleiches gilt für den Bolzen 3 und damit die Tankklappe 1.

Da das Stellelement 8 mit Hilfe einer Druckfeder 18 in Richtung der Öffnungsposition des Kraftfahrzeug-Klappenelementes bzw. der Tankklappe 1 vorgespannt ist, kann sich im Anschluss an den beschriebenen Entriegelungsvorgang des Stellelementes 8 die fragliche Druckfeder 18 entspannen. Dadurch wird zugleich das Stellelement 8 in seine in der Fig. 2A, B dargestellte rechte Endposition überführt und als Folge hiervon der Bolzen 3 mit dem angeschlossenen Kraftfahrzeug-Klappenelement und folglich der Tankklappe 1 ausgestellt. Insgesamt wird die Tankklappe 1 ausgeworfen, weshalb sich der Arbeitsname "Ejektor" für dieses Variante erklärt.

Bei dem Ausführungsbeispiel nach der Fig. 3A, B fehlt die den Drehriegel 9 beaufschlagende Feder 17. Das lässt sich darauf zurückführen, dass der Drehriegel 9 sowohl die Funktion "entriegelt" als auch "verriegelt" jeweils gesteuert vom Motor 7 alleine einnimmt. Außerdem erkennt man bei dieser Variante eine Feder 19, die mit ihrem abgekröpften Ende in eine Ausnehmung bzw. Kulisse 10 eingreift. Die Feder 19 sorgt im Zusammenspiel mit der Kulisse 10 am Stellelement 8 für eine Zwangsführung des Stellelementes 8. Die Feder 19 fehlt bei der Variante nach der Fig. 2A, B. Ein Wechsel zwischen den beiden Ausführungsbeispielen kann folglich unschwer durch eine entsprechende Berücksichtigung / Nichtberücksichtigung der Federn 17, 19 erfolgen.

Dabei wird im Detail bei der Variante nach der Fig. 3A, B so vorgegangen, wie dies in der gattungsbildenden DE 10 2011 116 067 A1 beschrieben wird. Das heißt, die Kulisse 10 definiert insgesamt eine geschlossene und rundum laufende Führungskurve für das abgekröpfte Ende der Feder 19. Dadurch wird das fragliche abgekröpfte Ende der Feder 19 zwangsgeführt und folglich auch das Stellelement 8. Das abgekröpfte Ende der Feder 19 wird mit Hilfe der Kulisse bzw. der fraglichen Führungskurve im Detail gesteuert, wie dies im Stand der Technik bereits beschrieben wird. Das heißt, durch eine einmalige Druckbeaufschlagung der Tankklappe 1 ("Push") lässt sich das Stellelement 8 in seine Position "Verriegelt" überführen. Ein Entriegelungsvorgang korrespondiert dazu, dass die Tankklappe 1 erneut mit Druck beaufschlagt wird ("Push"). Jedenfalls erfolgt der Wechsel zwischen der entriegelten und verriegelten Position des Stellelementes 8 durch die realisierte Zwangsführung und den Eingriff des abgekröpften Endes der Feder 19 in die Kulisse 10.

Der Motor 7 sorgt in diesem Zusammenhang in Verbindung mit dem Drehriegel 9 dafür, dass das Stellelement 8 in der Position "verriegelt" eine zusätzliche Blockade erfährt. Denn zu diesem Zweck greift der Drehriegel 9 mit seinem Verriegelungsarm 14 hinter die Kulisse 10 bzw. die hintere Kante des Stellelementes 8, gesteuert von dem Motor 7. Für die Entriegelung muss erneut der Motor 7 beaufschlagt werden, so dass der Verriegelungsarm 14 aus der Kulisse 10 auftauchen kann.

Der Motor 7 kann insgesamt auch bei beiden Versionen mit Hilfe eines beispielsweise im Kraftfahrzeuginnenraum befindlichen Schalters oder auch einer Fernbedienung beaufschlagt werden. Bei der erstgenannten Variante "Ejektor" nach der Fig. 2A,B korrespondiert die Entriegelung des Drehriegels 9 mit Hilfe des Motors 7 dazu, dass die Tankklappe 1 wie beschrieben geöffnet bzw. ausgestoßen wird. Bei der Variante "Push-Push" nach der Fig. 3A, B kommt es zu einer Entriegelung des Stellelementes 8 und dazu, dass die Tankklappe 1 zumindest spaltweise ausgestellt wird. Denn auch in diesem Fall entspannt sich die Druckfeder 18 und sorgt dafür, dass die Tankklappe 1 zumindest geringfügig aufgestellt wird. Die Federkraft der Druckfeder 18 ist nämlich so bemessen, dass Sie die Kraft der in die Kulisse eingreifenden Feder 19 hierbei überwindet.

Zum Schließen der Tankklappe 1 wird diese in beiden Fällen mit Druck beaufschlagt. Bei der Variante nach der Fig. 2A, B führt dies dazu, dass der Drehriegel 9 beaufschlagt durch die Feder 17 mit seinem Verriegelungsarm 14 in bzw. hinter die Ausnehmung bzw. Kulisse 10 einfällt. Bei der Variante "Push-Push" nach der Fig. 3A, B greift die Feder 19 mit ihrem abgekröpften Ende in die Kulisse 10 ein und hält durch die dadurch realisierte Zwangsführung das Stellelement fest. Zur ergänzenden Blockade bzw. Verriegelung des Stellelementes 8 mag anschließend der Motor 7 dafür sorgen, dass das Stellelement 9 zusätzlich mit seinem Verriegelungsarm 14 in bzw. hinter die Kulisse 10 eingreift.

Beide Varianten sind darüber hinaus mit einer einleitend bereits angesprochenen Notentriegelungseinheit 5, 20, 21 ausgerüstet. Die Notentriegelungseinheit 5, 20, 21 weist zunächst einmal die nach außen geführte und außerhalb des Gehäuses 2 zugängliche Handhabe 5 auf, die man am besten in der Fig. 1 erkennt. Darüber hinaus gehört zu der Notentriegelungseinheit 5, 20, 21 noch ein drehbar in der Basis 2b des Gehäuses 2 gelagerter Stellzapfen 20 und ein an den Stellzapfen 20 angeschlossener Hebel 21.

Mit Hilfe der Handhabe 5 kann der Stellzapfen 20 und folglich der daran angeschlossene Hebel 21 rotiert werden. Im Falle eines Ausfalls des Motors 7 lässt sich auf diese Weise der Hebel 21 in Eingriff mit einer Kontur 22 am Drehriegel 9 bringen. Da die Kontur 22 schräg gestellt ist sorgt eine beispielhaft in der Fig. 3A angedeutete Gegenuhrzeigersinnbewegung des Stellzapfens 20 dafür, dass der Drehriegel 9 mit seinem Verriegelungsarm 14 aus der Ausnehmung bzw. Kulisse 10 ausgeschwenkt wird bzw. sich von der hinteren Kante des Stellelementes 8 löst. Auf diese Weise kann der Drehriegel 9 mit der Hilfe der Notverriegelungseinheit 5, 20, 21 bei ausgefallenem Motor 7 zumindest in seine entriegelte Position überführt werden. Dadurch kommt das Stellelement 8 bei der Variante nach der Fig. 2A, B unmittelbar frei und wird die Tankklappe 1 als Folge hiervon ausgestellt. Vergleichbares gilt für das Ausführungsbeispiel nach der Fig. 3A, B.

## Patentansprüche

1. Stellantrieb für ein Kraftfahrzeug-Klappenelement, insbesondere für eine Tankklappe (1) eines Kraftfahrzeuges, mit einem Motor (7), und mit einem das Kraftfahrzeug-Klappenelement beaufschlagenden Stellelement (8), wobei das Kraftfahrzeug-Klappenelement zwischen einer Öffnungs- und Schließposition verstellbar ausgebildet ist, und wobei zusätzlich ein vom Motor (7) beaufschlagter Drehriegel (9) vorgesehen ist, welcher zum Verriegeln/Entriegeln des Stellelementes (8) dient, wobei der Motor (7) den Drehriegel (9) direkt antreibt, **dadurch gekennzeichnet, dass** eine Notentriegelungseinheit (5, 20, 21) für den Drehriegel (9) vorgesehen ist, wobei die Notentriegelungseinheit (5, 20, 21) mit einer von außen zugänglichen Handhabe (5) und einem am Drehriegel (9) angreifenden Hebel (21) ausgerüstet ist, wobei ein drehbar in einer Basis (2b) eines Gehäuses (2) des Stellantriebs gelagerter Stellzapfen (20) an dem Hebel (21) angeschlossen ist, sodass mit Hilfe der Handhabe (5) der Stellzapfen (20) und folglich der daran angeschlossene Hebel (21) rotiert werden kann.

2. Stellantrieb nach Anspruch 1, **dadurch gekennzeichnet, dass** der Motor (7) mit seiner Abtriebswelle einen Stellarm (13) des Drehriegels (9) beaufschlagt.

3. Stellantrieb nach Anspruch 2, **dadurch gekennzeichnet, dass** der Drehriegel (9) neben dem Stellarm (13) mit einem Verriegelungsarm (14) ausgerüstet ist, welcher mit dem Stellelement (8) wechselwirkt.

4. Stellantrieb nach Anspruch 3, **dadurch gekennzeichnet, dass** der Stellarm (13) und der Verriegelungsarm (14) größtenteils parallel zueinander verlaufend an einen Ausleger (15) des Drehriegels (9) angeschlossen sind.

5. Stellantrieb nach einem der Ansprüche 1 bis 4, **dadurch gekennzeichnet, dass** das Stellelement (8) eine Kulisse (10) zur Steuerung seiner Öffnungs- und Schließbewegung aufweist.

6. Stellantrieb nach Anspruch 5, **dadurch gekennzeichnet, dass** zur Einnahme der Öffnungs- und Schließposition des Kraftfahrzeug-Klappenelementes eine Feder (19) in die Kulisse (10) eingreift.

7. Stellantrieb nach einem der Ansprüche 1 bis 6, **dadurch gekennzeichnet, dass** das Stellelement (8) mittels einer Druckfeder (18) in Richtung der Öffnungsposition des Kraftfahrzeug-Klappenelementes vorgespannt ist.

8. Stellantrieb nach einem der Ansprüche 1 bis 7, **dadurch gekennzeichnet, dass** der Drehriegel (9) mit einer Feder (17) in Richtung "Verriegeln" des Stellelementes (8) vorgespannt ist.

## Claims

1. Actuator for a motor vehicle flap element, in particular for a fuel filler flap (1) of a motor vehicle, comprising a motor (7), and comprising a control member (8) which acts on the motor vehicle flap element, the motor vehicle flap element being designed to be adjustable between an open and closed position, and a rotary lock (9) which is acted on by the motor (7) being additionally provided, said rotary lock being used to lock/unlock the control member (8), the motor (7) directly driving the rotary lock (9), **characterized in that** an emergency unlocking unit (5, 20, 21) for the rotary lock (9) is provided, the emergency unlocking unit (5, 20, 21) being equipped with a handle (5) which is accessible from the outside and a lever (21) which affects the rotary lock (9), with a control pin (20) which is rotatably mounted in a base (2b) of a housing (2) of the actuator being connected to the lever (21) so that the control pin (20) and consequently the lever (21) connected thereto can be rotated using the handle (5).

2. Actuator according to claim 1, **characterized in that** the motor (7) uses its output shaft to act on an actuating arm (13) of the rotary lock (9).

3. Actuator according to claim 2, **characterized in that** in addition to the actuating arm (13), the rotary lock (9) is equipped with a locking arm (14) which interacts with the control member (8).

4. Actuator according to claim 3, **characterized in that** the actuating arm (13) and the locking arm (14) are connected to an arm (15) of the rotary lock (9) so as to extend largely in parallel with one another.

5. Actuator according to any of claims 1 to 4, **characterized in that** the control member (8) has a link (10) for controlling its opening and closing movement.

6. Actuator according to claim 5, **characterized in that** in order to assume the open and closed position of the motor vehicle flap element, a spring (19) engages in the link (10).

7. Actuator according to any of claims 1 to 6, **characterized in that** the control member (8) is biased in the direction of the open position of the motor vehicle flap element by means of a compression spring (18).

8. Actuator according to any of claims 1 to 7, **characterized in that** the rotary lock (9) is biased by a spring (17) in the "locking" direction of the control member (8).

## Revendications

1. Actionneur pour un élément de clapet de véhicule automobile, en particulier pour un clapet de réservoir (1) d'un véhicule automobile, comportant un moteur (7), et comportant un élément de réglage (8) sollicitant l'élément de clapet de véhicule automobile, l'élément de clapet de véhicule automobile étant réalisé de manière à pouvoir être réglé entre une position d'ouverture et une position de fermeture, et un verrou rotatif (9) sollicité par le moteur (7) étant en outre prévu, lequel sert à verrouiller/déverrouiller l'élément de réglage (8), le moteur (7) entraînant directement le verrou rotatif (9), **caractérisé en ce qu'**une unité de déverrouillage de secours (5, 20, 21) est prévue pour le verrou rotatif (9), l'unité de déverrouillage de secours (5, 20, 21) étant équipée d'une poignée (5) accessible depuis l'extérieur et d'un levier (21) agissant sur le verrou rotatif (9), un tourillon de réglage (20) monté de manière à pouvoir tourner dans une base (2b) d'un boîtier (2) de l'actionneur étant raccordé au levier (21) de sorte que, à l'aide de la poignée (5), le tourillon de réglage (20) et donc le levier (21) raccordé à celui-ci peuvent être mis en rotation.

2. Actionneur selon la revendication 1, **caractérisé en ce que** le moteur (7) sollicite un bras de réglage (13) du verrou rotatif (9) avec son arbre de sortie.

3. Actionneur selon la revendication 2, **caractérisé en ce que** le verrou rotatif (9) est équipé, outre le bras de réglage (13), d'un bras de verrouillage (14) qui coopère avec l'élément de réglage (8).

4. Actionneur selon la revendication 3, **caractérisé en ce que** le bras de réglage (13) et le bras de verrouillage (14) sont raccordés à une flèche (15) du verrou rotatif (9) de manière à s'étendre en grande partie parallèlement l'un à l'autre.

5. Actionneur selon l'une quelconque des revendications 1 à 4,
**caractérisé en ce que** l'élément de réglage (8) présente une coulisse (10) pour la commande de son mouvement d'ouverture et de fermeture.

6. Actionneur selon la revendication 5, **caractérisé en ce qu'**un ressort (19) vient en prise dans la coulisse (10) pour la prise de la position d'ouverture et de fermeture de l'élément de clapet de véhicule automobile.

7. Actionneur selon l'une quelconque des revendications 1 à 6,
**caractérisé en ce que** l'élément de réglage (8) est précontraint au moyen d'un ressort de compression (18) en direction de la position d'ouverture de l'élément de clapet de véhicule automobile.

8. Actionneur selon l'une quelconque des revendications 1 à 7, **caractérisé en ce que** le pêne rotatif (9) est précontraint par un ressort (17) en direction du « verrouillage » de l'élément de réglage (8).
